# EUROPEAN PATENT APPLICATION

(11) **EP 1 674 995 A2**
(43) Date of publication of application: **28.06.2006**
(21) Application number: 05027967.8
(22) Date of filing: 20.12.2005
(51) Int. Cl.: G06F 9/46, H04L 29/06

(54) **Integration of control and business application using integration servers**

(30) Priority: 22.12.2004 US 20371
(71) Applicant: Rockwell Automation Technologies, Inc., Mayfield Heights, OH 44124 (US)
(72) Inventor: Callaghan, David M., Concord, Ohio 44077 (US)
(74) Representative: Jung HML

(57) **Abstract**

The subject invention relates to a framework for integrating control and business systems and/or applications without middleware. The systems and methods include an integration component that provides for cross-platform connectivity with integration servers, databases, computers, etc. associated with the business systems and/or applications. Such connectivity can include TCP/IP based communication between any controller within the control system and the business systems and/or applications. Suitable controllers can reside within any industrial network, including non-TCP/IP industrial networks. The TCP/IP connection can be utilized by the controllers to: serve up web pages, data views, web objects, CIP objects and XML, publish messages, electronic product data, data, tags, status, state and error messages, and subscribe to receive information from an integration server, a database, a broker and/or a computer. Likewise, the business systems and/or applications can utilize the TCP/IP connection to provide, manage and/or remove applications, files and/or services to any of the controllers.

## Description

### RELATED APPLICATIONS

This application is related to co-pending U.S. Patent Application serial number (Docket No. 04AB 148/ALBRP362US) filed on and entitled "TUNNELING FILE SYSTEM INTERFACE THROUGH NETLINX STACKS," co-pending U.S. Patent Application serial number (Docket No. 04AB 170/ALBRP363US) filed on and entitled "DATABASE STORED PROCEDURE USED TO COLLECT CONTROL SYSTEM DATA," co-pending U.S. Patent Application serial number (Docket No. 04AB 198/212/ALBRP365US) filed on and entitled "APPLICATION AND SERVICE MANAGEMENT FOR INDUSTRIAL CONTROL DEVICES," co-pending U.S. Patent Application serial number (Docket No. 04AB205/ALBRP366US) filed on and entitled "EMBEDDED APPLICATION MANAGEMENT IN INDUSTRIAL CONTROL SYSTEMS," co-pending U.S. Patent Application serial number (Docket No. 04AB232/ALBRP386US) filed on and entitled "RELIABLE MESSAGING INSTRUCTIONS."

### TECHNICAL FIELD

The subject invention relates to industrial control systems and, more particularly, to systems and methods that integrate control and business systems through integration servers.

### BACKGROUND OF THE INVENTION

Electronic commerce, or e-commerce, generally refers to business conducted over an electronic medium such as the Internet (e.g., through the World Wide Web, or web). E-commerce transactions typically are facilitated through Internet based applications such as web services, electronic shopping carts, file transfer protocol (FTP), secure FTP, electronic data interchange (EDI), email, and Universal Description, Discovery, and Integration (UDDI), among others. E-commerce transactions commonly are differentiated based on the type of trading partners that are interacting. For example, commerce between a business and a consumer generally is referred to as business-to-consumer (B2C) commerce, whereas commerce between businesses generally is referred to as business-to-business (B2B) commerce. Integration servers can be utilized to couple business and/or consumer trading partners and coordinate communication there between. By way of example, two businesses that employ disparate operating systems and/or applications can utilize an integration server to interact across internal and external networked computer systems.

In many instances, e-commerce can leverage information obtained from control systems and/or affects control systems. For example, a consumer purchasing an automobile through a dealer's web site may desire to know the lead time associated with building an automobile with a customized set of options. The dealer may query its manufacturing plants to ascertain whether an automobile with those options has been built or is going to be built. The result along with additional information can facilitate determining when such automobile will arrive at the dealer's distributor. If the purchaser decides to place a custom order (e.g., where there is no plan to build a car with the desired combination of options), the custom specification can be provided to the manufacturing plant and utilized to automatically configure one or more control systems therein. For example, the customer may have specified the color green as the external color of the automobile. This data can be conveyed to a control system and utilized to select a suitable paint gun.

Such control systems commonly employ one or more industrial controllers. A typical industrial controller is a special purpose processing device for controlling (e.g., automated and semi-automated) industrial processes, machines, manufacturing equipment, plants, and the like. Controllers can execute a control program or routine in order to measure one or more process variables or inputs representative of the status of a controlled process and/or effectuate outputs associated with control of the process. For example, an output module can interface directly with a controlled process by providing an output from memory to an actuator such as a motor, drive, valve, solenoid, and the like. In distributed control systems, controller hardware configuration can be facilitated by separating the industrial controller into a number of control elements, each of which performs a different function. Particular control modules needed for the control task can then be connected together on a common backplane within a rack and/or through a network or other communications medium. Various control modules can also be spatially distributed along a common communication link in several locations. Data can be communicated with these remote modules over a common communication link, or network, wherein all modules on the network communicate *via* a standard communications protocol.

Conventionally, specialized software and/or hardware (e.g., adapters), referred to as middleware, is developed and utilized to provide an interface between the business applications and the control system and associated controllers. Such middleware can add cost and delays, and typically provides a limited set of functionality. In addition, middleware commonly is designed around a particular family of controllers and, therefore, usually is not be compatible across controllers. Moreover, design and development consumes resources and time that can be alternatively utilized.

### SUMMARY OF THE INVENTION

The following presents a simplified summary of the subject invention in order to provide a basic understanding of some aspects of the invention. This summary is not an extensive overview of the invention. It is intended neither to identify key or critical elements of the invention nor to delineate the scope of the invention. Its sole purpose is to present some concepts, of the invention in a simplified form as a prelude to the more detailed description that is presented later.

The systems and methods of the subject invention provide a novel framework for integrating control and business systems and/or applications. The systems and methods incorporate an interface ("integration component") within the control system (e.g., within a controller chassis or in connection with a controller) that provides for cross-platform connectivity with integration servers, databases (*e.g.,* SQL), computers, etc. Such connectivity provides for leveraging the integration server to integrate the control and business systems, wherein the integration server (or platform) can be utilized to manage transactions, process flow, exception handling, *etc.* The integration server can act as a data switch with adapters for various platforms and/or application interfaces, including disparate automation and business applications. Suitable integration servers include WebMethods Integration Server, IBM WebSphere, IBM DB2 Information Integrator (DB2II), Tibco ActiveEnterprise, BEA WebLogic, Oracle9iAS Interconnect and Oracle Workflow 2.6.2, PeopleSoft Integration Broker, and SAP NetWeaver, for example.

Conventional systems typically require middleware, wherein the integration server utilizes the middleware to obtain and provide data to the control system. The subject invention mitigates any need for middleware by employing the above noted controller interface as a TCP/IP based connection between the control system and target integration servers, database, and/or computer. Respective controllers residing within the control system can be associated with disparate industrial protocols such as Ethernet/IP, DeviceNet, ControlNet, for example. The TCP/IP based connection and associated applications can be utilized to interface with essentially any adapter provided by the integration server platform, as well as customized adapters. The TCP/IP based connection and/or associated applications can be utilized as a web server adapter for serving up web pages to the integration server, an XML adapter for parsing XML data and conveying data views, presenting data and services as customized or standard business objects, implementing interfaces such as ISO 15745, S95 - ISO 62264, an email adapter, a file transfer adapter, a JMS adapter, an HTTP adapter, a JDBC adapter, MQ adapter, message broker, visualization markup such as Scalable Vector Graphics (SVG), web services such as reliable messaging, eventing and notification, TCP/UDP socket, both synchronous and asynchronous API and messaging, etc. In one instance, the controller can be considered a data aggregator, wherein the data is segmented data one or more data views, and upper level systems can request one or more these data views through the TCP/IP interface, for example, based on tags and/or schema of interest. It is to be understood that this TCP/IP interface is not limited to only TCP/IP communications, but includes related protocols TCP/IP, UDP/IP, unicast and/or multicast Ethernet protocols, and includes IPv4 and IPv6 with and/or without IPSec.

In one aspect of the invention, an architecture that integrates control layers and business layers is provided. The architecture includes a control layer with one or more control systems and an integration component. The one or more control systems can be utilized to control various entities such as plants, machines, industrial automation processes, manufacturing equipment, and the like. The integration component can provide a suitable communications interface with a business layer. This interface can include a TCP/IP based adapter for Ethernet and an execution environment such as a Java Virtual Machine (JVM), volatile and/or nonvolatile data and message storage, and both plug-in and integrated applications for web, XML, HTML, XHTML, file transfer, HTTP, Java beans, email, API such as JDBC, JMS, JTA and/or other reliable messaging based communication such as MQ, MQTT. In addition, the communication can be through hard wire and/or wireless mechanisms. This interface can provide a real-time and/or live data feed between upper level systems in the business layer and the controllers of the control layer without any middleware between the control and business layers.

In another aspect of the invention, a control system with an integration component is illustrated. The integration component can reside within (e.g., in the chassis) or in connection with an industrial controller of the control system. The integration component can facilitate communication between the industrial controller and business systems/applications. For example, the integration component can provide a TCP/IP based communication channel that can be utilized to interface the industrial controller with an integration server, database, computer, the Internet, etc. Communication over this communication channel include serving up web pages, data views, XML, etc., publishing messages, data, tags, status, state, error messages, *etc.* to an integration server, database, etc. and/or subscribing to receive information from an integration server, database, etc. Likewise, any business system/application can communicate with any of the controllers through the integration component or through the integration servers many adapters and utilize its data mapping and transformation capabilities. Such communication can include downloading files, applications and/or services, polling for messages, removing files, applications and/or services, monitoring input, output, state, status, etc. launching and/or terminating applications, interacting and/or performing workflow *via* BPEL and/or related BPEL4WS, etc, inventory management etc.

In yet another aspect of the subject invention, the integration component can communicate with the business system through an integration server. The integration component can be designed to support various prepackaged, customized, and/or legacy applications related to electronic commerce. Such applications can be designed based on standards such as Extensible Markup Language (XML), Hypertext Transfer Protocol (HTTP), Java Message Service (JMS), Java DataBase Connectivity (JDBC), Open DataBase Connectivity (ODBC), Simple Object Access Protocol (SOAP), Lightweight Directory Access Protocol (LDAP), RosettaNet, SSL, B2B interfaces and the like. The integration component can include a TCP/IP adapter and associated applications and execution environment that can provide a TCP/IP gateway between controllers within a control system and the integration server. Suitable communication techniques include serving up web based data, publishing information, subscribing to receive information, and/or polling for information, programmable events and/or trigger mechanisms to send messages and/or perform functions upon message/data receipt. In addition, such communication can include downloading, launching, terminating, updating, pausing, monitoring and/or removing applications, and/or tunneling through controllers. It should be appreciated that an integration component that is part of the control system architecture typically has direct access and understanding of the data and control program and can provide several inherit benefits such as synchronous memory transfers between the control layer and the business layer, data buffering, for example, in reliable message queues instead of data arrays in the control system, and overall throttling and filtering of the business applications data demands while maintaining the appropriate priorities for the real time control components.

In still other aspects of the subject invention, methods are provided that integrate control and business systems. Such methods include incorporating an integration component within an industrial controller and interfacing other controllers in the control system with the controller with the integration component. Such controllers can be associated with disparate industrial control networks such as Ethernet/IP, ControlNet and DeviceNet. The integration component can then be utilized to provide an interface with a business system, integration server, the Internet, a computer, application programming interfaces, and/or database, for example. At least one controller can communicate with such entities through the integration component. Additionally or alternatively, these entities can communicate with any of the controllers within the control system through the integration component.

To the accomplishment of the foregoing and related ends, the invention, then, comprises the features hereinafter fully described. The following description and the annexed drawings set forth in detail certain illustrative aspects of the invention. However, these aspects are indicative of but a few of the various ways in which the principles of the invention can be employed. Other aspects, advantages and novel features of the invention will become apparent from the following detailed description of the invention when considered in conjunction with the drawings.

### BRIEF DESCRIPTION OF THE DRAWINGS

FIG. 1 illustrates an exemplary architecture for integrating control and business layers.

FIG. 2 illustrates an exemplary system an exemplary control system that includes an integration component that provides an interface to one or more business systems and/or applications.

FIG. 3 illustrates an exemplary system that integrates control and business systems using an integration server.

FIG. 4 illustrates an exemplary application employing the integration component within a manufacturing environment.

FIG. 5 illustrates an exemplary system that employs a plurality of integration components to integrate control and business systems.

FIG. 6 illustrates an exemplary system that employs integration components to integrate multiple control systems and business systems.

FIG. 7 illustrates an exemplary method for integrating control and business systems.

FIG. 8 illustrates another exemplary method for integrating control and business systems.

FIG. 9 illustrates an exemplary a system that employs intelligence to facilitate integration of control and business systems.

FIG. 10 illustrates an exemplary an exemplary industrial controller in accordance with an aspect of the invention.

FIG. 11 illustrates an exemplary computing architecture that can be employed in connection with the subject invention.

FIG. 12 illustrates an exemplary networking environment that can be employed in connection with the subject invention.

### DETAILED DESCRIPTION OF THE INVENTION

As utilized in this application, terms "component," "adapter," "agent," "module," "system," "controller," "device," and variants thereof are intended to refer to a computer-related entities, either hardware, a combination of hardware and software, software, or software in execution. For example, a component may be, but is not limited to being, a process running on a processor, a processor, an object, an executable, a thread of execution, a program, and/or a computer. By way of illustration, both an application running on a server and the server can be a component. One or more components can reside within a process and/or thread of execution and a component can be localized on one computer and/or distributed between two or more computers.

The systems and methods of the subject invention facilitate integration of control and business systems and/or applications. The systems and methods provide such functionality through integration component that resides within the control system, either within a controller chassis or in connection with the controller, or as virtual manifestations such as applications running on a computer(s). The integration component provides cross-platform connectivity with integration servers, databases, computers, application interfaces, etc. Such connectivity provides a direct connection with the integration server, wherein the integration server can be leveraged to manage transactions, map and/or transform data between applications, perform workflow, process flow, exception handling, visualization, etc. The integration component mitigates any need for middleware and/or custom application code. Conventional systems typically require middleware, wherein the integration server utilizes the middleware to obtain and provide data to the control system.

The subject invention is described with reference to the drawings, wherein like reference numerals are used to refer to like elements throughout. In the following description, for purposes of explanation, numerous specific details are set forth in order to provide a thorough understanding of the present invention. It may be evident, however, that the present invention may be practiced without these specific details. In other instances, well-known structures and devices are shown in block diagram form in order to facilitate describing the present invention.

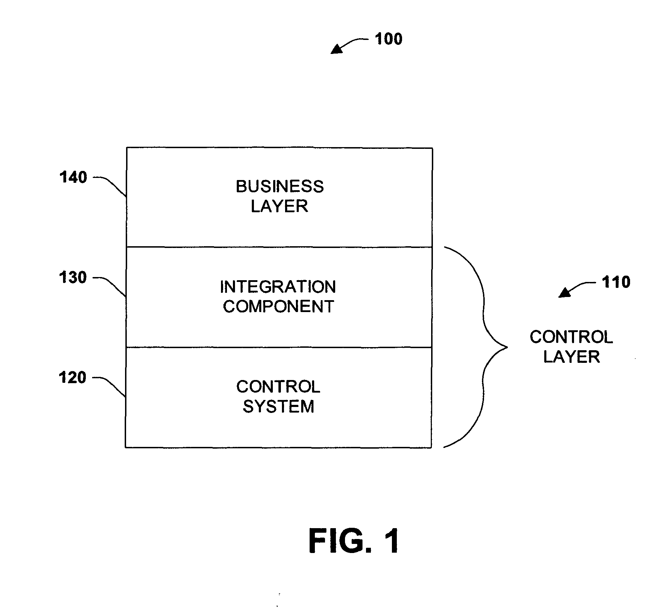

FIG. 1 illustrates an architecture 100 that integrates control and business layers. The architecture 100 includes a control layer 110. As depicted, the control layer 110 includes a control system 120 and an integration component 130. It is to be appreciated that the integration component 130 can be hardware and/or software based. The control system 120 can have one or more industrial controllers (e.g., programmable logic controllers, or PLC's) for controlling various entities such as plants, machines, industrial automation processes, manufacturing equipment, and the like. Respective controllers can be hardware and/or software based and can execute control programs, routines, instruction sets, and the like that obtain and/or analyze inputs and/or generate outputs that effectuate the controlled entity. It is to be appreciated that such control programs can be programmed in essentially any programming language.

Examples of suitable languages include industrial control languages (e.g., structured text (ST), sequential function chart (SFC), functional block diagram (FBD), instruction list (IL), and ladder diagram (LD)), C, C++, C#, Graphical Motion Language (GML), Java, Flow-Charts, *etc.,* and/or any combination thereof. New instructions in LD, for example, can provide synchronous/atomic data access, and support transactions and reliable messaging instructions. In addition, the controller can add LD instructions, which can perform event based tasks upon the event of message send/receive instead of polling the data source. The control system can also prioritize tasks to throttle the data demands of the business system through the integration component 130 while still performing the real-time control of the system.

The integration component 130 can provide an interface that can couple the control system 120 to a business layer 140. Such coupling can be through an integration server, a database, a computer, the Internet, *etc.* as described in detail below. The integration component 130 can provide for communication between the control system 120 and entities residing within the business layer 140 through various communication channels. For example, the integration component 130 can include a TCP/IP (Transmission Control Protocol / Internet Protocol) based adapter, execution environment such as Java Virtual Machine (JVM), integrated applications, and/or plug-in applications and framework (OSGi).

In one instance, this adapter can provide an Ethernet (e.g., Ethernet, fast Ethernet and Gigabit Ethernet), a web, a markup language (e.g., XML, HTML, XHTML...), a file transfer (e.g., File Transfer Protocol (FTP)), an HTTP (Hyper Text Transfer Protocol), a Universal Plug-n-Play (UPnP), a Java Application Programming (API) (e.g., JMS, JDBC, JTA...), a reliable messaging (e.g., through a broker, or act as a broker), a MQ, a MQTT, a business object, and/or data binding interface. In addition, the adapter can provide for presenting standard data models like ISO 15745 and S95 - ISO 62264, Business Process Execution Language (BPEL), and/or provide a directory (LDAP) of the control system, classification of the equipment and data contained there within, and interact with the security technologies and policies of the IT organization such as firewall against for specific clients based upon ACL or other security and filtering mechanism. In addition, the communication can be hard wire (e.g., CAT5 UTP 8-wire cable, coaxial cable, USB, RS-232. RS-485...) and/or wireless (e.g., radio frequency (RF), infrared (IR)...). Examples of suitable wireless communication include WiFi IEEE 802.11 and WiMax IEEE 802.16. Such adapter can provide for communication (e.g., a live data feed) with any entity that employs a similar or complimentary adapter. This capability can be leveraged to provide a mechanism for the control layer 110, for example, the control system 120, to directly interact with upper level systems in the business layer 140 without any middleware between the control and business layers 110 and 140.

By way of example, where the integration component 130 is incorporated within a controller (not shown) of the control system 120, that controller can talk directly to upper level systems of the business layer 140 through the integration component 130. Such communication can include serving up web based data (e.g., web pages, data views, objects, XML...), publishing information (e.g., messages, data, tags, status, state, error messages, integrating with workflow...) to an integration server, acting as a message broker and/or provide messages queues and/or topics for pub/sub, database, etc. and/or subscribing to receive information from an integration server, database, etc. It is to be appreciated that the integration component 130 can synchronize the control system 120 I/O data updates with the data copies exchanged with the business layer 140 to perform synchronous data transfers of single and/or multiple data elements, as well as perform transactions, synchronous and/or asynchronous updates, as well as programmable triggering and eventing mechanisms.

Controllers residing on non-TCP/IP networks (e.g., DeviceNet, ControlNet ...) can talk to the upper level systems through the controller incorporating the integration component 130. It is to be appreciated that the integration component 130 can also be utilized for communication between controllers residing within the control layer 110. The exchanges of information in both directions, between the business layer 140 and the control layer 110 through the integration component 130, can be based upon programmable triggers and/or events, asynchronous and/or synchronous API interfaces, remote procedure invocations, and/or include message brokers, and/or intelligent queue/de-queuing/filtering of various data priority (e.g., urgent, nominal, low, debugging). Likewise, the business layer 140 can communicate with controllers residing within the control layer 110. In addition, the integration component 130 can provide a mechanism for the business layer 140 to download, poll, remove, monitor, view, modify, execute, manage, publish/subscribe message and/or topics *etc.* files, applications, services, *etc.* in the control layer 110. Such communication includes tunneling down to any controller residing on any network (e.g., NetLinx, Control & Information Protocol (CIP), Data Highway Plus (DH+) based networks) to view, obtain and/or modify data, files, services and/or applications. The communication also provides for incremental updates to any file, service and/or application residing and/or executing within a controller or device. Such updates can be dynamic and mitigate any need for downloading new firmware to enhance functionality as well as provide revision management.

Conventionally, an additional layer is utilized to couple control layers and business layers. The additional layer typically includes middleware (hardware and/or software) and/or custom application code that transform information between control and business layers since such layers have not included the same data types, binding of data and API interfaces, protocols, applications, messaging paradigms like transactions, reliable messages, asynchronous messaging, brokers, pub/sub topic and queue messaging. The subject architecture mitigates any need for an additional layer between the control layer 110 and the business layer 140 through the integration component 130. It is to be appreciated that the integration component 140 can be associated with various other features and characteristics useful to the control layer and can facilitate pervasive computing.

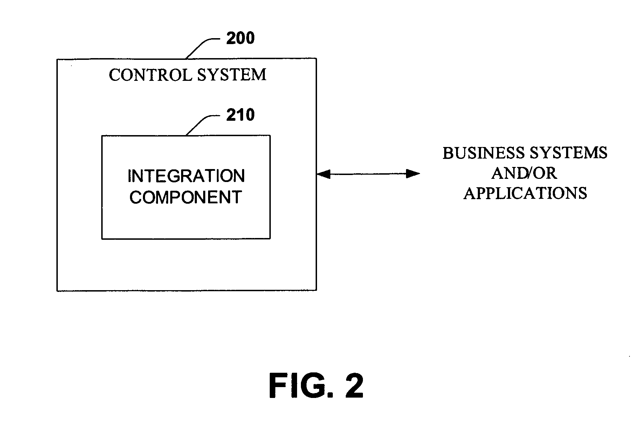

FIG. 2 illustrates an exemplary control system 200 with an integration component 210 that provides an interface to one or more business systems and/or applications. The integration component 210 can reside within (e.g., the chassis) or in connection with an industrial controller (not shown) of the control system 200 and can facilitate communication between the industrial controller and the business systems and/or applications. For example, the integration component 210 can provide a TCP/IP based adapter that can be utilized to interface the industrial controller with the business systems and/or applications. It is to be appreciated that the integration component 210 can provide a data feed with the business systems and/or applications without any middleware. Conventional systems typically employ middleware since industrial controllers execute instructions programmed in industrial programming languages and business systems do not. By eliminating any need for middleware, the subject invention can mitigate delays, complex integration (e.g., data/control prioritization and security) and cost associated with utilizing middleware.

The control system 200 can include one or more controllers residing on similar and/disparate networks (not shown). For example, one or more controllers can be associated with an Ethernet/IP, DeviceNet or ControlNet network. Any controller residing on any of these networks can utilize the integration component 210 to directly communicate with the business systems and/or applications. Where the integration component 210 resides with a controller, any controller can communicate with the business systems and/or applications through the controller with the integration component 210. For example, a controller on a DeviceNet network can interact with the controller employing the integration system 210 to proxy/broker/communicate with the business systems, even though the DeviceNet controller does not speak TCP/IP and/or include all of the applications and/or protocols.

It is to be appreciated that such communication can include serving up web pages, data views, objects, XML, etc., publishing messages, data, tags, status, state, error messages, *etc.* to an integration server, database, etc. and/or subscribing to receive information from an integration server by leveraging its data transformation and adapters, database, etc. In one aspect, the controller can be considered a data aggregator, wherein the data is segmented into one or more data views, and the business systems and/or applications request one or more these data views or invoke business objects, for example, based on tags and/or schema of interest. In addition, any business system and/or application can communicate with any controller within the control system 200 through the integration component 210. Such communication can includes downloading files, applications and/or services, polling for messages, removing files, applications and/or services, monitoring input, output, state, status, *etc*. launching and/or terminating applications, configuration and/or control, *etc.*

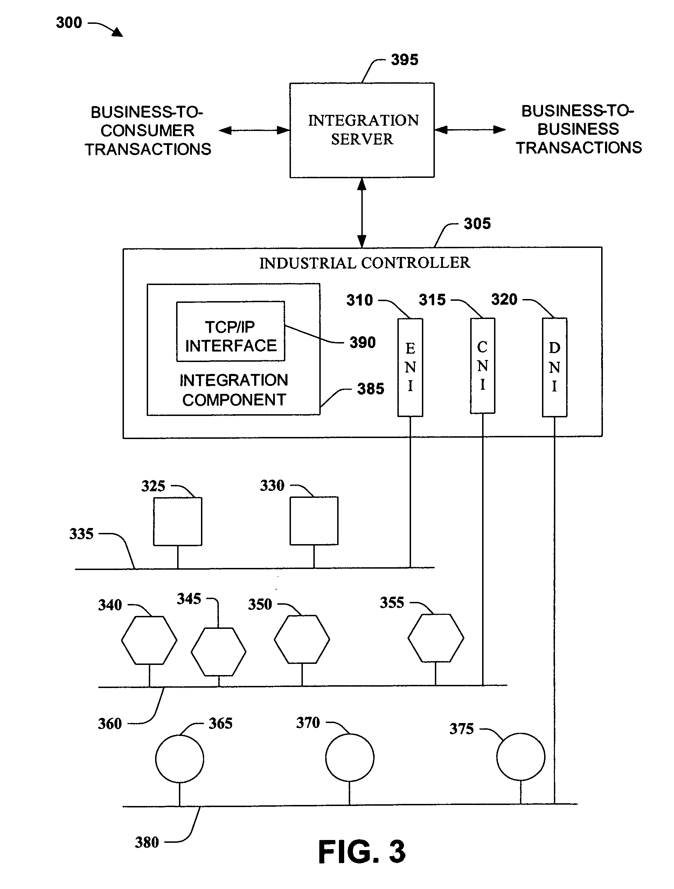

FIG. 3 illustrates a system 300 that integrates control and business systems through an integration server. The system 300 includes an industrial controller 305 with an Ethernet/IP interface 310, a ControlNet interface 315 and a DeviceNet interface 320. The Ethernet/IP interface provides for communication with a device 325 and a device 330 residing on an Ethernet/IP network 335. The ControlNet interface 315 provides for communication with non-TCP/IP based devices 340, 345, 350 and 355 (collectively referred to hereafter as devices 340-355) residing on a ControlNet network 360. The DeviceNet interface 320 provides for communication with non-TCP/IP based devices 365, 370 and 375 (collectively referred to hereafter as devices 365-375) residing on a DeviceNet network 380. The devices 325, 330, 340-355 and 365-375 can be utilized to control various industrial processes, machines, manufacturing equipment, plants, and the like and can include input, output, memory and processing modules to facilitate control. Respective controllers can execute control programs, routines, instruction sets, and the like, which obtain and/or analyze inputs and/or generate outputs that effectuate the controlled entity (e.g., a motor, a drive, a valve, a solenoid, a switch...). Such control programs can be programmed in essentially any programming language including industrial control languages (e.g., ST, SFC, FBD, IL and LD), C, C++, C#, GML, Java, Flow-Charts, etc., and/or any combination thereof, and/or include new instructions for the purpose synchronous data movement and/or performing transactions and/or event based tasks.

The industrial controller 305 further includes an integration component 385 with a TCP/IP adapter 390, which can provide a TCP/IP gateway between the devices 325, 330, 340-355 and 365-375 and an integration server 395. The integration sever 395 can be a computer, server, cluster, or service oriented architecture (SOA) designed and utilized to couple and facilitate interaction between business and/or consumer trading partners. By way of example, two businesses that employ disparate operating systems and/or applications can utilize the integration server 395 to interact across internal and external networked computer systems. Likewise, a consumer and a business can utilize an integration server 395 for interaction between different systems. Commerce between business partners generally is referred to as business-to-business (B2B) commerce and typically includes transactions between two businesses exchanging funds, goods, services and/or data. Commerce between a business and a consumer generally is referred to as business-to-consumer (B2C) commerce and commonly encompasses transactions such as the exchange of services, information and/or products. The integration server 395 can act as a data switch with adapters for the various platforms and/or application interfaces. Suitable integration servers include WebMethods Integration Server, IBM WebSphere, IBM DB2 Information Integrator (DB2II), Tibco ActiveEnterprise, BEA WebLogic, Oracle9iAS InterConnect and Oracle Workflow 2.6.2, PeopleSoft Integration Broker, and SAP NetWeaver, for example.

It is to be appreciated that the integration server 395 can be designed to support various prepackaged, customized, and/or legacy applications. Such applications can be designed based on standards such as XML, HTTP, JMS, SOAP, LDAP, and the like. In addition, both hub-and-spoke based integration servers and network-centric based integration servers can be employed in accordance with aspects of the subject invention. In general, with hub-and-spoke based integration servers, applications connect through a central server, which manages communication, data translation, and process interactions among the connected systems and applications. With network-centric bus based integration servers, nodes are linked along a common backbone, and communication between interconnected systems and applications travel along the backbone to the integration server that handles the data transformation, translation, and routing to the receiving nodes.

As noted above, the integration component 385 and the TCP/IP adapter 390 can provide a TCP/IP gateway between the devices 325, 330, 340-355 and 365-375 and an integration server 395. This gateway can be utilized as an Ethernet, a web, a file transfer, an HTTP, an HTTPS, an operating system and/or execution environment such as a Java virtual machine (JVM) and API. In addition, the gateway can provide for data transports such as JMS, JDBC, JTA, etc. Furthermore, the gateway can provide firewall and/or security capabilities such as SASL (e.g., Kerberos...) and SSL between the controller 305 and the integration server 395, LDAP directory services and/or a reliable messaging interface. It should be appreciated that the component 390, commonly referred to as the TCP/IP adapter, can represent communications components, which includes TCP/IP, UDP/IP, Multicast Ethernet protocols, including IPv4 and IPv6. Any of the devices 325, 330, 340-355 and 365-375 can utilize the integration component 385 and the TCP/IP adapter 390 to communicate with the integration server 395, and the integration server 395 can utilize the integration component 385 and the TCP/IP adapter 390 to communicate with the devices 325, 330, 340-355 and 365-375. This capability can be leveraged to mitigate any need for middleware, for example, as employed by conventional systems to facilitate such interaction. Communication between the devices 325, 330, 340-355 and 365-375 and the integration server 395 can include, but is not limited to, serving up web based data (e.g., web pages, data views, XML, a web object, a CIP object...), publishing information (e.g., messages, data, tags, status, state, error messages...), subscribing to receive information, and/or polling for information. In addition, the communication can include downloading, launching, terminating, updating, pausing, monitoring and/or removing applications. Furthermore, suitable communication includes tunneling down to any of the 325, 330, 340-355 and 365-375 devices.

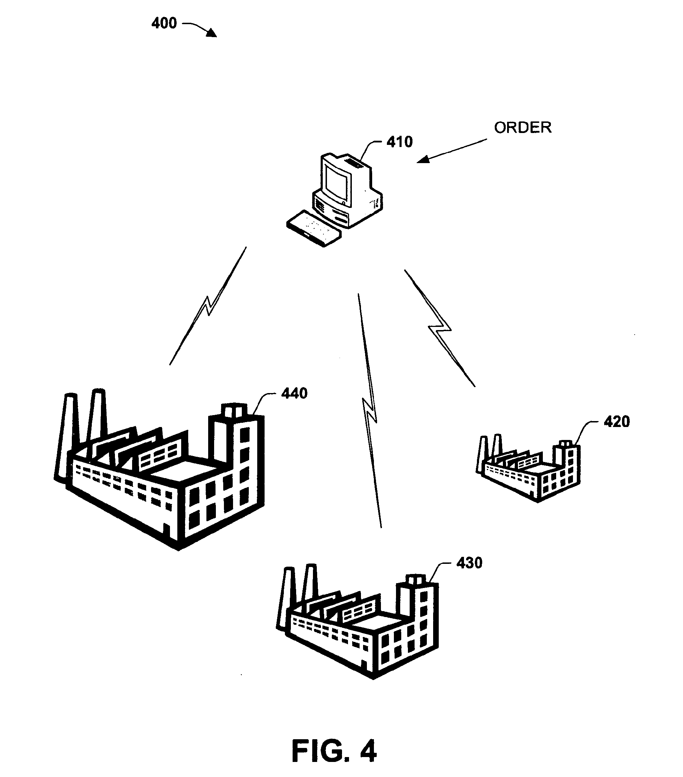

FIG. 4 provides a particular application wherein the subject invention can be employed. It is to be understood that this example is for explanatory purposes and does not limit the subject invention. FIG. 4 depicts a system 400 that integrates control and business systems. The system 400 includes a cluster, server, service or microprocessor based device 410 running a business application(s) and possibly database(s) and integration server(s), implementing Business Process Execution Language (BPEL/BPEL4WS) and workflow, *etc.* It is to be appreciated that the device 410 can be part of an Enterprise Resource Planning (ERP), a Manufacturing Execution System (MES) or a Machine Control (MC) system. The device 410 can be utilized to accept orders from customers or trading partners. Such orders can be placed over the Internet, through email, through a web page, through a trading grid, *etc.* In addition, the device 410 can interact with an integration server, and such orders can be obtained through the integration server. As depicted, a received order can be processed by a plant 420, a plant 430 and/or a plant 440. It is to be appreciated that more or less plants can be utilized to process the order. The plants utilized in this example are illustrative and not limitative.

The plants 420-440 can be associated with different manufacturing capacities, location, labor, quality, associated costs, performance, software configuration and revisions, machine utilization and maintenance schedules. For example, the plant 440 may be able to manufacture two, three, *etc.* times the quantity of the plant 420 within a similar amount of time. In another example, a plant may be concurrently processing different orders, wherein each order consumes a portion of the total manufacturing capacity and, thus, determines an available capacity. After receiving the order, the device 410 can execute business logic to determine current manufacturing capacity of the plants 420-440. The business logic can be routed to the integration server, which can suitably map, if needed, the logic instructions for the plants 420-440 and convey the instruction thereto. Such conveyance can be achieved through a publish/subscribe mechanism.

Respective plants 420-440 can include one or more controllers with an integration component, as described herein. The integration component can provide a TCP/IP based interface, and optionally security, between the integration server and the plants 420-440, and the order can be passed down through this TCP/IP connection. Respective plants 420-440 can provide capacity related information through the integration component to the integration server *(e.g., via* publishing), wherein the device 410 can obtain the capacity related information (e.g., through polling and/or subscription mechanism). It is to be appreciated that the capacity related information can also be provided from the plants 420-440 as web pages, XML, HTML, business objects, data views, reliable messages, files, *etc.* In addition, the capacity related information can be provided through email and/or a chat room.

In one instance, the capacity related information can be utilized to determine which of the plants 420-440 should process the order, including distributing the order across plants 420-440. In addition, the plants 420-440 can communicate with various other entities (*e.g.*, suppliers, wholesalers, retailers ...) through the integration component to obtain at least a portion of the capacity related information. For example, one of the plants 420-440 may have available time to process the order, but may not have sufficient resources (*e.g.*, materials) to complete the order. In this instance, that plant can communicate through its integration component to the integration server to request resources. The result may indicate that sufficient resources can be obtained within a specified time frame. This time frame can be included in the capacity information provided to the device 410, wherein the user can determine whether the time frame is acceptable.

Upon selecting one or more of the plants 420-440 to process the order, the capacity related information can be updated and refreshed through a subsequent communication. In addition, the plant(s) processing the order can provide periodic status (e.g., began processing, X% completed, where X is a real number, finished processing...) updates for the customer. Such updates can be provided through an associated integration component to the integration server. For example, the controller can utilize its integration component to publish status updates. The customer can receive such publications by subscribing to receive them. It is to be appreciated that published information can be obtained in a plant through RFID tags. For example, the information stored within a RFID tag can be indicative of the status. For example, when the order has been processed, a corresponding RFID tag can be written with electronic data that indicates the order has been completed. The controller and its integration component may include RFID middleware and interact directly with RFID readers or RFID middleware on remote servers.

The controller and integration component may coordinate material movement, workflow and tracking by leveraging the RFID tags using local applications or services *via* the network connection. Another aspect is the controller and its integration component may exchange data (e.g. reliable messages, queue/topic, JMS or MQTT, TCP/UDP socket) with RFID printer/label/programming devices directly with or without the services of an integration server. When the RFID tag is read, this status information can be obtained and conveyed to the customer through the controller's integration component and the integration server. For example, the customer can be notified through email or a web tracking interface when the order has been processed. In another example, newly manufactured goods can have new RFID tags and/or associated information that needs to get published to a global registry such as UCCnet Global Registry and/or made available *via* other means to trading partners. These RFID related messages can flow from reliable message queues/topics located in the controller and/or integration component in an automation layer and/or RFID middleware to business applications and/or global registry through integration server adapters such as web services, reliable messages, file transfers, and/or email that can include binary/text attachments, or directly when possible without the services of the integration server.

In general, an RFID tag is a semiconductor chip with one or more antennas affixed to a product. The chip is utilized to store electronic data related to the product. Reading from and/or writing to an RFID tag can be achieved through radio frequency (RF) based wireless communication *via* devices referred to as an RFID reader. In general, writing is utilized to add and/or modify product specific information to an RFID tag, and reading is utilized to retrieve the information, for example, to provide for automatic product identification. In many instances, the electronic data written to and/or read from an RFID tag includes an Electronic Product Code (EPC), which, in general, is a unique number that is encoded (e.g., as a bit code) and embedded within the RFID tag. Typical EPC data can include information about the product (e.g., product type, date of manufacture, lot number, etc.) and/or associated cases, pallets, and/or container levels, for example.

Typically, an RFID tag periodically emits (e.g., hundreds of times per second) product information. When passed through or scanned by a reader, the emitted date can be retrieved. This technique enables product information to be obtained without unpacking the product or scanning barcode labels. In one instance, products and corresponding RFID tags can be associated with an agent-based manufacturing control system. In general, an agent-based control system is a community of autonomous, intelligent computational units referred to as agents. Respective agents typically are responsible for local decision making and control of one or more explicit parts of a manufacturing process, wherein cooperation amongst the agents render a desirable global behavior of controlled systems and/or processes. Cooperation between the agents typically is based on communication *via* transmitting messages following various interaction and negotiation scenarios and/or protocols.

In another aspect of the subject invention, the inventory related information can be obtained and utilized to affect the manufacturing at any of the plants 420-440. For example, the inventory related information may be utilized to determine whether manufacturing needs to ramp up based on demand or whether an inventory exists and manufacturing should continue, slow down, or even temporarily halt. In one instance, manufacturing can be halted in order to mitigate costs associated with maintaining the inventory. In another instance, the inventory information can be conveyed through an integration component of the plants 420-440 to a trading grid. Traders participating therein can bid and/or negotiate for inventoried items. The activity within the trading grid can be utilized to facilitate determining whether to increase, continue, slow down, or halt manufacturing. In yet another aspect, if on of the plants 420-440 is offline, if a controller within the plant determines inventory exists, then the inventory can be traded immediately rather that wait the plant to brought back up or for personnel to manually enter such information into the system.

In yet another example, a manufacturing process at any of the plants 420-440 can require relatively large amounts of electricity to perform processes. The plants 420-440 can integrate its control system with a power utility system. In doing so, both parties can benefit with the power utility having more accurate and control over power demand planning, and the manufacturer can realize more cost effective manufacturing due to lower energy costs. When the control system responsible for actual execution of the manufacturing is more tightly coupled with the internal business inventory systems, tracking goods used and produced during manufacture, and integrated with the real time customer demand, pricing, cost of goods, and expected delivery, a more efficient and competitive business can emerge. By integrating interfaces, applications, protocols, connectors, and/or adapters supported by integration servers, the control system can seamlessly be integrated into the business applications, such as CRM, ERP, and MES, for example.

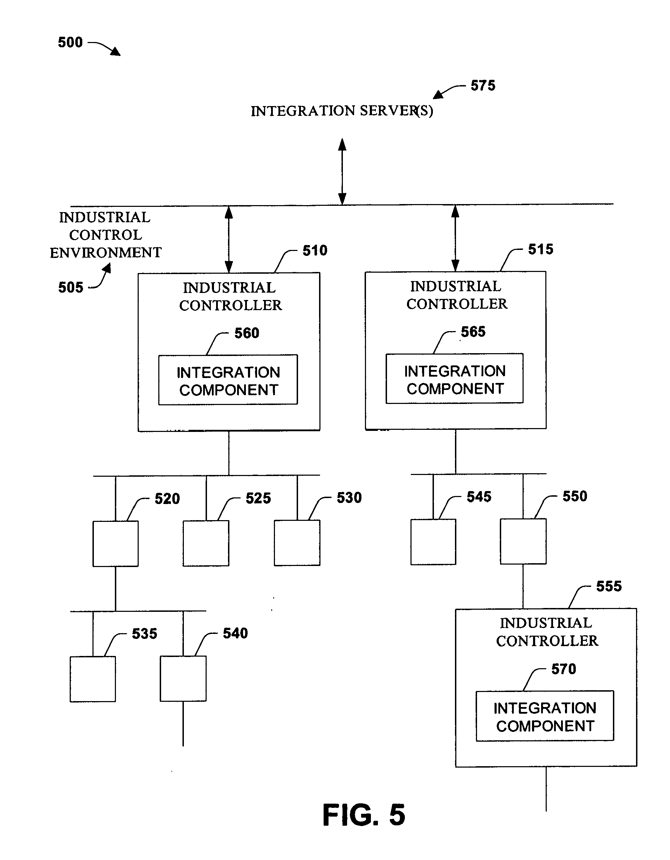

FIG. 5 illustrates a system 500 that employs a plurality of integration components to integrate control and business systems. The system 500 includes an industrial control environment 505 with a plurality of controllers 510, 515, 520, 525, 530, 535, 540, 550 and 555. The controllers 510, 515 and 555 respectively include integration components 560, 565 and 570. As depicted, controllers 510 and 520-540 utilize the integration component 560 to communicate with an integration server(s) 575, and the controllers 515 and 545-555 utilize the integration component 565 to communicate with the integration server(s) 575. It is to be appreciated that in various aspects of the subject invention, more than one integration component can be jointly utilized to facilitate such communication.

As described above, the industrial controllers 510, 515, 520, 525, 530, 535, 540, 550 and 555 can be associated with various industrial automation networks, including TCP/IP and non-TCP/IP networks and can utilize associated integration components to communicate with the integration server(s) 575 over a TCP/IP communication channel (including TCP, UDP, unicast/multicast, IPv4, IPv6, and including security such as IPSec, SSL...). Examples of communication at least include publishing, subscribing to receive, polling, viewing, etc. data (e.g., associated with an integration server and database), downloading, invoking, updating, removing, terminating, etc. executable applications, and reliable messaging. In addition, suitable communication includes serving web pages and web objects and conveying email.

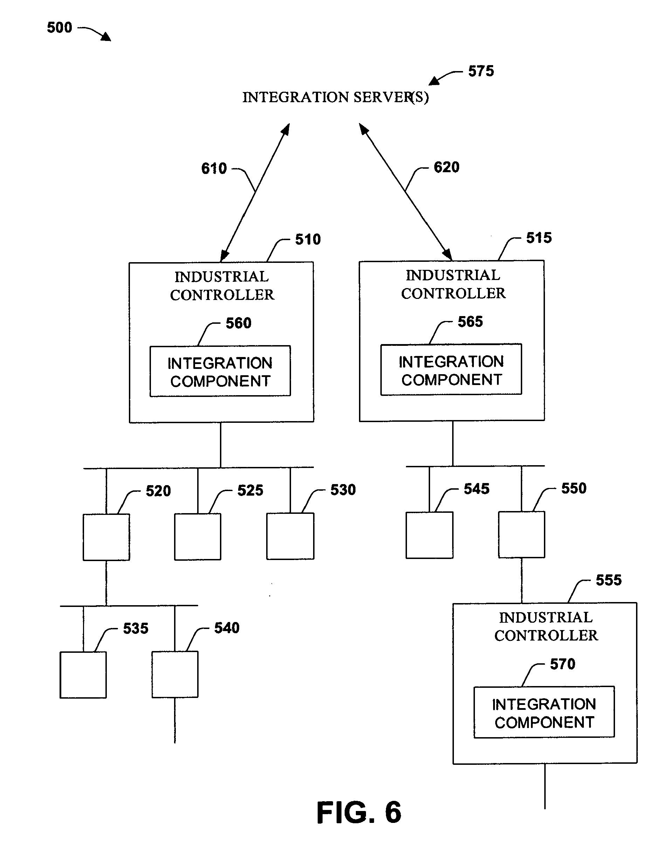

FIG. 6 depicts the system 500, wherein the controllers 510 and 515 and their respective networks reside within disparate industrial control environments, but can utilize similar integration servers to communicate with businesses and/or consumers. For example, controllers associated with the integration component 560 can communicate with the integration server(s) 575 through a channel 610, and the controllers associated with the integration component 565 can communicate with the integration server(s) 575 through a channel 620. In addition, the controllers 510 and 515 can utilize respective integration components 610 and 620 to communicate with each other through the integration server(s) 575.

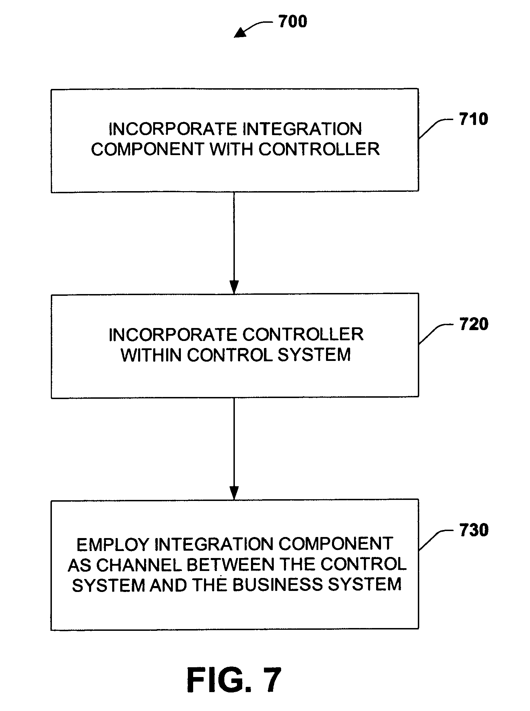

FIGS. 7-8 illustrate methodologies, in accordance with an aspect of the present invention. While, for purposes of simplicity of explanation, the methodologies are shown and described as a series of acts, it is to be understood and appreciated that the present invention is not limited by the order of acts, as some acts can, in accordance with the present invention, occur in different orders and/or concurrently with other acts from that shown and described herein. For example, those skilled in the art will understand and appreciate that one or more of the methodologies could alternatively be represented as a series of interrelated states or events, such as in a state diagram. Moreover, not all illustrated acts may be required to implement the methodologies in accordance with the present invention.

FIG. 7 illustrates a method for integrating control and business systems. At 710, an integration component as described herein is incorporated into an industrial controller. The controller can be a programmable logic controller (PLC) or the like. As such, the controller can execute control programs, routines, instruction sets, *etc.* that obtains and/or analyze inputs and/or generate outputs that effectuate a controlled entity. Such control programs can be programmed in essentially any programming language. Examples of suitable languages include industrial control languages such as ST, SFC, FBD, IL and LD, C, C++, C#, GML, Java, Flow-Charts, etc., and/or any combination thereof. Moreover, such languages can include new instructions, which can perform data updates synchronized with the control system data handlers, provide atomic data updates, data table lock/read/write/modify/unlock, data table revisions and/or transactions in/out of the control layer

At reference numeral 720, the controller can be incorporated into a control system that controls or monitors various entities such as plants, machines, industrial automation processes, manufacturing equipment, and the like. Such incorporation includes interfacing other controllers in the control system with the controller with the integration component. At reference numeral 730, the controller with the integration component can then be utilized to provide an interface with a business system, integration server and/or database. For example, the integration component can be utilized as a TCP/IP adapter and/or Java Virtual Machine (JVM) and/or associated applications, APIs and protocols. Such adapter can provide an Ethernet, web, XML, HTML, XHTML, file transfer, HTTP, JDBC, email, and/or a reliable messaging interface like JMS, MSMQ, MQ, and MQTT. In addition, the adapter can provide for transactions such as Java Transaction API (JTA) based transactions and support Business Process Execution Language (BPEL), BPEL4WS (BPEL For Web Services), and BPELJ (BPELJ with Java business logic) for workflow. Communication through this interface can be *via* wire and/or wireless techniques and include any of the following TCP, UDP, unicast or multicast, IPv4, IPv6, and/or IPSec packets. The foregoing can provide a mechanism to directly interact with the business systems, databases, and/or integration servers without any middleware.

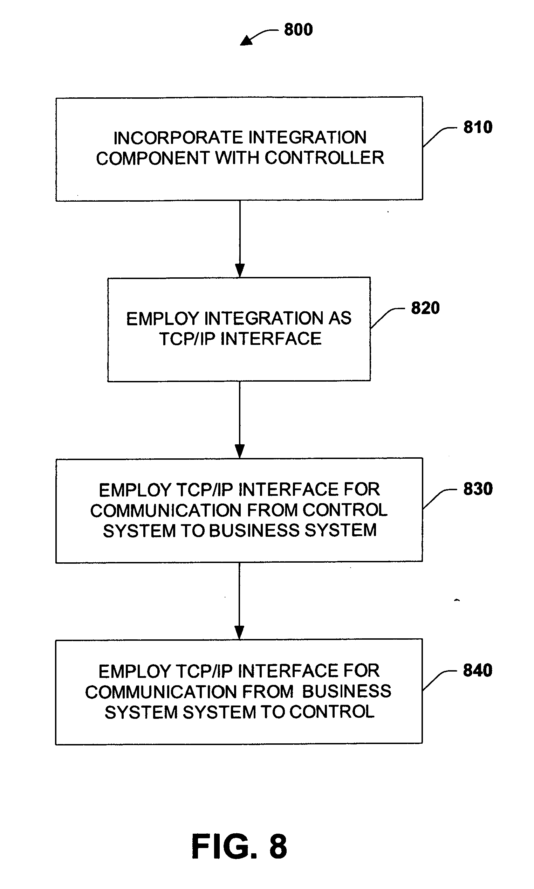

FIG. 8 illustrates a method for integrating control and business systems. At 810, an industrial controller with an integration component is incorporated into a control system. Such system can be utilized to include disparate industrial control networks (e.g., Ethernet/IP, ControlNet and DeviceNet) and control various entities such as plants, machines, industrial automation processes, manufacturing equipment, and the like. At 820, the integration component is utilized to provide a TCP/IP interface and applications for Ethernet, web, XML, HTML, XHTML, file transfer, HTTP, Java, email, a reliable message communications, and/or workflow between any of the controllers within the control system and a business system, a database and/or an integration server.

At reference numeral 830, at least one controller communicates with the business system, database and/or integration server through the integration server. Such communication can include serving up web pages, data views, XML, etc., publishing information such as messages, data, tags, status, state, error messages, etc., and/or subscribing to receive information from the business system, database and/or integration server. Controllers residing on non-TCP/IP networks can talk to the upper level systems through the integration component. In addition, the integration component can also be utilized for communication between controllers within different control systems.

Alternatively, at 840 the business system, database and/or integration component can communicate with any of the controllers within the control system through the integration component. For example, at least one of these upper level systems can employ the integration component to download, poll, remove, request, monitor, view, modify, execute, manage, *etc.* files, applications, services, etc. from the control system. Such communication can include tunneling down through controllers and/or networks to communicate with nested controllers and/or networks, including non-TCP/IP based controllers and/or network (e.g., NetLinx, Control & Information Protocol (CIP), Data Highway Plus (DH+) based networks) to view, obtain and/or modify data, files, services and/or applications. The communication also provides for incremental updates to any file, service and/or application residing and/or executing within a controller. Such updates can be dynamic and mitigate any need for downloading new firmware.

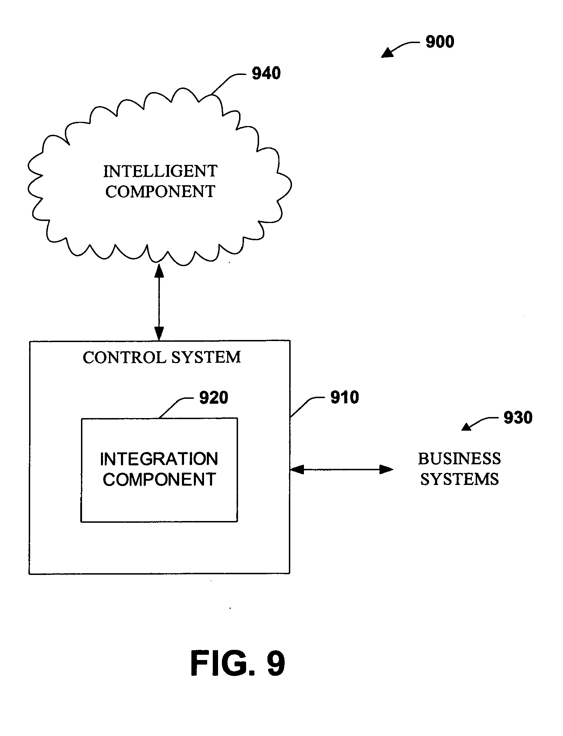

FIG. 9 illustrates a system 900 that employs intelligence to facilitate integration of control and business systems. The system 900 includes a control system 910 with an integration component 920. As described in detail above, the integration component 920 can provide a TCP/IP interface with one or more business systems 930, for example, through an integration server (not shown). The system 900 further includes an intelligent component 940 that can be utilized to facilitate the integration component 920 with any decision making and data filtering. It is to be appreciated that the intelligent component 940 can utilize applications, configured triggers, and/or statistics, heuristics, probabilities, historical data, costs, *etc.* in connection with facilitating the integration component 920 by performing a probabilistic and/or statistic-based analysis, which can be utilized to infer and/or render decisions.

The intelligent component 940 can provide for reasoning about or infer states of the system, environment, and/or user from a set of observations as captured *via* events and/or data. Inference can be employed to identify a specific context or action, or can generate a probability distribution over states, for example. The inference can be probabilistic - that is, the computation of a probability distribution over states of interest based on a consideration of data and events. Inference can also refer to techniques employed for composing higher-level events from a set of events and/or data. Such inference results in the construction of new events or actions from a set of observed events and/or stored event data, whether or not the events are correlated in close temporal proximity, and whether the events and data come from one or several event and data sources. Various classification (explicitly and/or implicitly trained) schemes and/or systems (e.g., support vector machines, neural networks, expert systems, Bayesian belief networks, fuzzy logic, data fusion engines...) can be employed in connection with performing automatic and/or inferred action in connection with the subject invention.

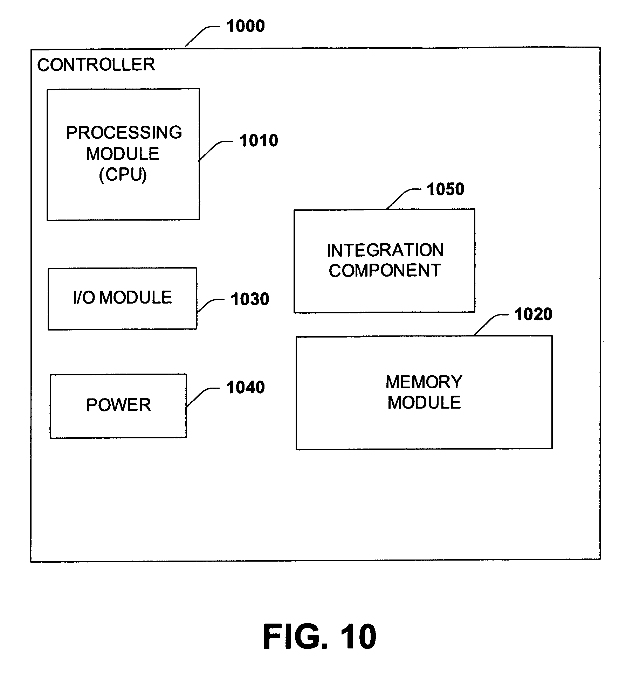

FIG. 10 illustrates an exemplary industrial controller 1000 in accordance with an aspect of the invention. The industrial device 1000 can be a programmable logic controller (PLC), and the like. A typical industrial controller is a special purpose processing device for controlling (e.g., automated and semi-automated) industrial processes, machines, manufacturing equipment, plants, and the like. The industrial controller 1000 can include one or more modules such as a processing module 1010, a memory module 1020, and an I/O module 1030. In addition, the industrial controller 1000 can include a power component 1040 that energizes the components 1010-1030. In addition, these components may be virtualized by applications, processes, and threads running on a computer.

The processing module 1010 can be utilized to execute control applications, end-user programs and associated instructions, which can be stored within the memory module 1020 or memory external to the industrial controller 1000. It should be appreciated that the memory module 1020 can refer to both volatile and non volatile storage including RAM, FLASH, disk, Storage Area Network (SAN), Network Attached Storage (NAS), *etc.* Such control programs can be utilized to measure one or more process variables or inputs representative of the status of a controlled process and/or effectuate outputs associated with control of the process through the I/O module 1030. The inputs and outputs can be digital and/or analog, assuming a continuous range of values. For example, an input channel of the I/O memory 1030 can be employed to receive analog and digital signals through sensors, switches and the like to provide information indicative of state and/or relating to a process, whereas an output channel can be utilized to convey a next state to an entity under the control of the controller. An output of the I/O module 1030 can interface directly with a controlled process by providing an output from memory to an actuator such as a motor, drive, valve, solenoid, and the like, RFID (tag, reader, printer...), *etc.* Both inputs and outputs can be recorded in the I/O memory 1020.

A typical control routine can be created in a controller configuration environment that has various tools and interfaces whereby a developer can construct and implement a control strategy using industrial and conventional programming languages or graphical representations of control functionality. Such control routine can be downloaded from the configuration system into the controller memory module 1020 for implementation of the control strategy in controlling a process or machine. The controller 1000 further includes an integration component 1050, which can provide a network interface (e.g., TCP/IP, UDP/IP, IPv4, IPv6...) interface, execution environment like a JVM (Java Virtual Machine), and/or operating system, data along with integrated and plug in applications and/or protocols that interface with business systems, integration servers and/or databases associated therewith, as described in detail herein.

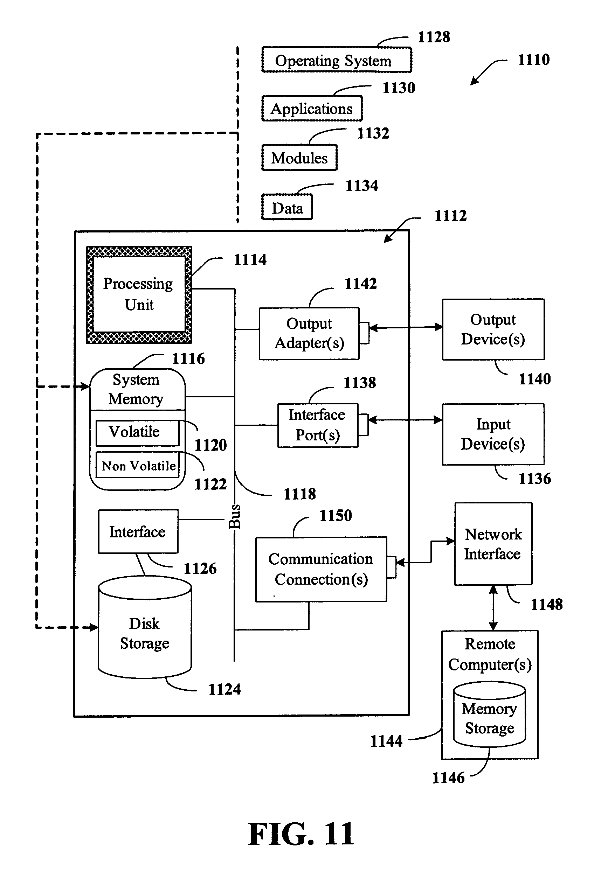

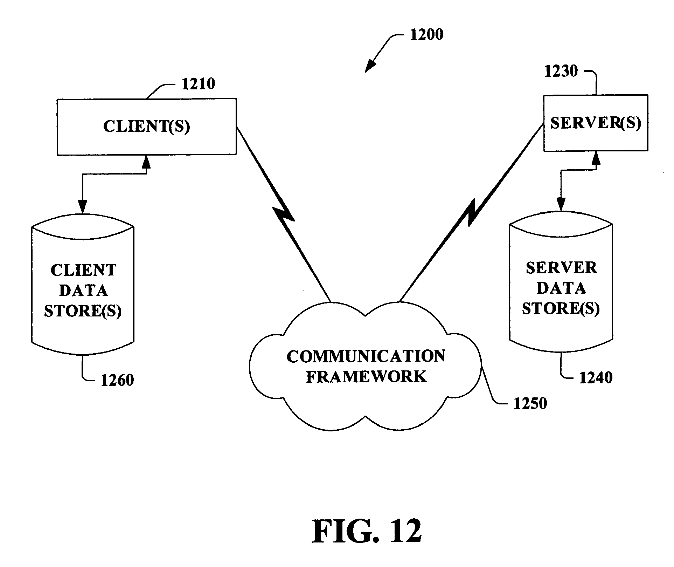

In order to provide a context for the various aspects of the invention, FIGS 11 and 12 as well as the following discussion are intended to provide a brief, general description of a suitable computing environment in which the various aspects of the present invention can be implemented. While the invention has been described above in the general context of computer-executable instructions of a computer program that runs on a computer and/or computers, those skilled in the art will recognize that the invention also can be implemented in combination with other program modules. Generally, program modules include routines, programs, components, data structures, etc. that perform particular tasks and/or implement particular abstract data types. Moreover, those skilled in the art will appreciate that the inventive methods may be practiced with other computer system configurations, including single-processor or multiprocessor computer systems, mini-computing devices, mainframe computers, as well as personal computers, hand-held computing devices, microprocessor-based or programmable consumer electronics, and the like. The illustrated aspects of the invention may also be practiced in distributed computing environments where task are performed by remote processing devices that are linked through a communications network. However, some, if not all aspects of the invention can be practiced on stand-alone computers. In a distributed computing environment, program modules may be located in both local and remote memory storage devices.

With reference to FIG. 11, an exemplary environment 1110 for implementing various aspects of the invention includes a computer 1112. The computer 1112 includes a processing unit 1114, a system memory 1116, and a system bus 1118. The system bus 1118 couples system components including, but not limited to, the system memory 1116 to the processing unit 1114. The processing unit 1114 can be any of various available processors. Dual microprocessors and other multiprocessor architectures also can be employed as the processing unit 1114.

The system bus 1118 can be any of several types of bus structure(s) including the memory bus or memory controller, a peripheral bus or external bus, and/or a local bus using any variety of available bus architectures including, but not limited to, 11-bit bus, Industrial Standard Architecture (ISA), Micro-Channel Architecture (MSA), Extended ISA (EISA), Intelligent Drive Electronics (IDE), VESA Local Bus (VLB), Peripheral Component Interconnect (PCI), Universal Serial Bus (USB), Advanced Graphics Port (AGP), Personal Computer Memory Card International Association bus (PCMCIA), and Small Computer Systems Interface (SCSI).

The system memory 1116 includes volatile memory 1120 and nonvolatile memory 1122. The basic input/output system (BIOS), containing the basic routines to transfer information between elements within the computer 1112, such as during start-up, is stored in nonvolatile memory 1122. By way of illustration, and not limitation, nonvolatile memory 1122 can include read only memory (ROM), programmable ROM (PROM), electrically programmable ROM (EPROM), electrically erasable ROM (EEPROM), or flash memory. Volatile memory 1120 includes random access memory (RAM), which acts as external cache memory. By way of illustration and not limitation, RAM is available in many forms such as synchronous RAM (SRAM), dynamic RAM (DRAM), synchronous DRAM (SDRAM), double data rate SDRAM (DDR SDRAM), enhanced SDRAM (ESDRAM), Synchlink DRAM (SLDRAM), and direct Rambus RAM (DRRAM).

Computer 1112 also includes removable/non-removable, volatile/non-volatile computer storage media. FIG. 11 illustrates, for example a disk storage 1124. Disk storage 1124 includes, but is not limited to, devices like a magnetic disk drive, floppy disk drive, tape drive, Jaz drive, Zip drive, LS-100 drive, flash memory card, or memory stick. In addition, disk storage 1124 can include storage media separately or in combination with other storage media including, but not limited to, an optical disk drive such as a compact disk ROM device (CD-ROM), CD recordable drive (CD-R Drive), CD rewritable drive (CD-RW Drive) or a digital versatile disk ROM drive (DVD-ROM). To facilitate connection of the disk storage devices 1124 to the system bus 1118, a removable or non-removable interface is typically used such as interface 1126.

It is to be appreciated that FIG. 11 describes software that acts as an intermediary between users and the basic computer resources described in suitable operating environment 1110. Such software includes an operating system 1128. Operating system 1128, which can be stored on disk storage 1124, acts to control and allocate resources of the computer system 1112. System applications 1130 take advantage of the management of resources by operating system 1128 through program modules 1132 and program data 1134 stored either in system memory 1116 or on disk storage 1124. It is to be appreciated that the present invention can be implemented with various operating systems or combinations of operating systems.

A user enters commands or information into the computer 1112 through input device(s) 1136. Input devices 1136 include, but are not limited to, a pointing device such as a mouse, trackball, stylus, touch pad, keyboard, microphone, joystick, game pad, satellite dish, scanner, TV tuner card, digital camera, digital video camera, web camera, and the like. These and other input devices connect to the processing unit 1114 through the system bus 1118 *via* interface port(s) 1138. Interface port(s) 1138 include, for example, a serial port, a parallel port, a game port, and a universal serial bus (USB). Output device(s) 1140 use some of the same type of ports as input device(s) 1136. Thus, for example, a USB port may be used to provide input to computer 1112 and to output information from computer 1112 to an output device 1140. Output adapter 1142 is provided to illustrate that there are some output devices 1140 like monitors, speakers, and printers, among other output devices 1140, which require special adapters. The output adapters 1142 include, by way of illustration and not limitation, video and sound cards that provide a means of connection between the output device 1140 and the system bus 1118. It should be noted that other devices and/or systems of devices provide both input and output capabilities such as remote computer(s) 1144.

Computer 1112 can operate in a networked environment using logical connections to one or more remote computers, such as remote computer(s) 1144. The remote computer(s) 1144 can be a personal computer, a server, a router, a network PC, a workstation, a microprocessor based appliance, a peer device or other common network node and the like, and typically includes many or all of the elements described relative to computer 1112. For purposes of brevity, only a memory storage device 1146 is illustrated with remote computer(s) 1144. Remote computer(s) 1144 is logically connected to computer 1112 through a network interface 1148 and then physically connected *via* communication connection 1150. Network interface 1148 encompasses communication networks such as local-area networks (LAN) and wide-area networks (WAN). LAN technologies include Fiber Distributed Data Interface (FDDI), Copper Distributed Data Interface (CDDI), Ethernet/IEEE 1102.3, Token Ring/IEEE 1102.5 and the like. WAN technologies include, but are not limited to, point-to-point links, circuit switching networks like Integrated Services Digital Networks (ISDN) and variations thereon, packet switching networks, and Digital Subscriber Lines (DSL).

Communication connection(s) 1150 refers to the hardware/software employed to connect the network interface 1148 to the bus 1118. While communication connection 1150 is shown for illustrative clarity inside computer 1112, it can also be external to computer 1112. The hardware/software necessary for connection to the network interface 1148 includes, for exemplary purposes only, internal and external technologies such as, modems including regular telephone grade modems, cable modems and DSL modems, ISDN adapters, and Ethernet cards.

FIG. 12 is a schematic block diagram of a sample-computing environment 1200 with which the present invention can interact. The system 1200 includes one or more client(s) 1210. The client(s) 1210 can be hardware and/or software (e.g., threads, processes, computing devices). The system 1200 also includes one or more server(s) 1230. The server(s) 1230 can also be hardware and/or software (e.g., threads, processes, computing devices). The servers 1230 can house threads to perform transformations by employing the present invention, for example. One possible communication between a client 1210 and a server 1230 can be in the form of a data packet adapted to be transmitted between two or more computer processes. The system 1200 includes a communication framework 1250 that can be employed to facilitate communications between the client(s) 1210 and the server(s) 1230. The client(s) 1210 are operably connected to one or more client data store(s) 1260 that can be employed to store information local to the client(s) 1210. Similarly, the server(s) 1230 are operably connected to one or more server data store(s) 1240 that can be employed to store information local to the servers 1230.

What has been described above includes examples of the present invention. It is, of course, not possible to describe every conceivable combination of components or methodologies for purposes of describing the present invention, but one of ordinary skill in the art may recognize that many further combinations and permutations of the present invention are possible. Accordingly, the present invention is intended to embrace all such alterations, modifications, and variations that fall within the spirit and scope of the appended claims.

In particular and in regard to the various functions performed by the above described components, devices, circuits, systems and the like, the terms (including a reference to a "means") used to describe such components are intended to correspond, unless otherwise indicated, to any component which performs the specified function of the described component (e.g., a functional equivalent), even though not structurally equivalent to the disclosed structure, which performs the function in the herein illustrated exemplary aspects of the invention. In this regard, it will also be recognized that the invention includes a system as well as a computer-readable medium having computer-executable instructions for performing the acts and/or events of the various methods of the invention.

In addition, while a particular feature of the invention may have been disclosed with respect to only one of several implementations, such feature may be combined with one or more other features of the other implementations as may be desired and advantageous for any given or particular application. Furthermore, to the extent that the terms "includes," and "including" and variants thereof are used in either the detailed description or the claims, these terms are intended to be inclusive in a manner similar to the term "comprising." In summary the subject invention relates to a framework for integrating control and business systems and/or applications without middleware. The systems and methods include an integration component that provides for cross-platform connectivity with integration servers, databases, computers, etc. associated with the business systems and/or applications. Such connectivity can include TCP/IP based communication between any controller within the control system and the business systems and/or applications. Suitable controllers can reside within any industrial network, including non-TCP/IP industrial networks. The TCP/IP connection can be utilized by the controllers to: serve up web pages, data views, web objects, CIP objects and XML, publish messages, electronic product data, data, tags, status, state and error messages, and subscribe to receive information from an integration server, a database, a broker and/or a computer. Likewise, the business systems and/or applications can utilize the TCP/IP connection to provide, manage and/or remove applications, files and/or services to any of the controllers.

## Claims

1. An architecture that integrates control and business layers, comprising:
a business layer; and
a control layer that is coupled to the business layer through an integration component that resides within a chassis of a controller of the control layer.

2. The architecture of claim 1, the integration component is a TCP/IP adapter.

3. The architecture of claim 1 or 2, the controller is a hardware or software based controller.

4. The architecture of claim 1, 2 or 3 the integration component is one of an execution environment, an operating system, an integrated application, a plug-in application, and a managed execution framework.

5. The architecture of one of claims 1 to 4, the integration component and the control layer are located on an execution space that is partitioned on a computer platform.

6. The architecture of one of claims 1 to 5, the integration component facilitates direct communication between the controller and systems of the business layer without middleware.

7. The architecture of claim 6, the communication is a real-time live data feed.

8. The architecture of one of claims 1 to 7, the integration component further provides for at least one of an Ethernet, a web, a markup language, a file transfer, an HTTP, a HTTPS, a JMS API, a JDBC, an ODBC, a message broker, a MQ, a MQTT client, a MQTT micro broker, a web service, a web service eventing, a web service notification, a reliable messaging, and a transaction based communication.

9. The architecture of one of claims 1 to 8, the integration component provides for at least one of serving up web based data, publishing information, brokering messages, and queuing messages.

10. The architecture of one of claims 1 to 9, the integration component synchronizes control system I/O data updates with data copies exchanged with the business layer to perform synchronous data transfers of single and/or multiple data elements.

11. A system that integrates control and business systems and/or applications, comprising:
a control system with one or more industrial controllers; and
an integration component, executing within the control system, that provides a TCP/IP based interface with one or more integration servers associated with a business system and/or application.

12. The system of claim 11, the integration component resides within the chassis of a hardware based or a software based controller.

13. The system of claim 11 or 12, further comprising one or more additional integration components that reside within individual controllers, respective integration components individually and/or jointly facilitate communication between the control system and the business systems and/or application.

14. The system of claim 11, 12 or 13, the one or more controllers are associated with one or more of an Ethernet/IP, an DeviceNet, a ControlNet, a DH+, an OPC, a Modbus, a Modbus/TCP, a UPnP, a USB, a Profibus, an RS-485, and an RS-232 protocol.

15. The system of one of claims 11 to 14, the TCP/IP based interface is utilized by the one or more controllers for serving up one or more of web pages, data views, web objects, CIP objects and XML to a broker, an integration server, a computer, and/or a database.

16. The system of one of claims 11 to 15, the TCP/IP based interface is utilized by the one or more controllers for publishing one or more of messages, electronic product data, data, tags, status, state and error messages to a broker, the integration server, a computer, or a database.

17. The system of one of claims 11 to 16, the TCP/IP based interface is utilized by the one or more controllers for subscribing to receive information from one or more of the integration servers, a database, a broker and a computer.

18. The system of one of claims 11 to 17, the one or more controllers aggregate and segment data into one or more data views and the business layer transmits a request through the integration component for at least one of the data views.

19. The system of one of claims 11 to 18, the request is based on tags and/or schema of interest.

20. The system of one of claims 11 to 19, the TCP/IP based interface is utilized by the business layer to download, launch, terminate and remove at least one of a file, an application and a service from the one or more controllers.

21. The system of one of claims 11 to 20, the TCP/IP based interface is utilized by the business layer to monitor control system inputs, outputs, state, and status associated with the one or more controllers.

22. The system of one of claims 11 to 21, the TCP/IP based interface provides for Ethernet, web, XML, HTML, XHTML, FTP, Secure FTP, HTTP,HTTPS, JMS, JDBC, ODBC, data streams and reliable messaging based communication.

23. The system of one of claims 11 to 22 is employed in an autonomous agent based control system.

24. The system of one of claims 11 to 23 is employed in a programmable logic controller (PLC).

25. A method for integrating control and business systems, comprising:
incorporating an integration interface into an industrial controller chassis;
employing the industrial controller in a control system; and
utilizing the integration interface to integrate the control system with a business system.

26. The method of claim 25, the integration component is utilized as one of a TCP/IP, a JVM, unicast Ethernet, multicast Ethernet, and a UDP adapter.

27. The method of claim 26, the TCP/IP adapter includes at least one of IPv4 and IPv6, with or without IPSec.

28. The method of claim 25, 26 or 27, the integration component provide an Ethernet, a web, an XML, an HTML, an XHTML, a file transfer, a secure file transfer, an HTTP, an HTTPS, a JDBC, an email, and a reliable messaging interface.

29. The method of one of claims 25 to 28, further comprising employing wire and/or wireless communication techniques to facilitate interaction between the control system and the business system.

30. The method of claim 29, the wireless communication is one of WiFI and WiMax.

31. The method of one of claims 25 to 30, the integration component provides for unicast and multicast communications.

32. The method of one of claims 25 to 31, further comprising exchanging information obtained from a Radio Frequency Identification (RFID) tag between the control system and the business system.

33. The method of one of claims 25 to 32, further comprising employing the integration interface to publish data to one of a broker, a database, and a server associated with the business system.

34. The method of one of claims 25 to 33, further comprising utilizing the integration component to provide communication between a non-TCP/IP and TCP/IP based industrial network and the business system.

35. A system that integrates control and business applications, comprising:
means for incorporating a TCP/IP based interface within the chassis of a controller; and
means for utilizing the TCP/IP based interface to communicate with an integration server without middleware.
